# EUROPEAN PATENT SPECIFICATION

(11) **EP 1 406 205 B1**
(45) Date of publication and mention of the grant of the patent: **18.11.2009**
(21) Application number: 03021101.5
(22) Date of filing: 26.01.1996
(51) Int. Cl.: G06K 7/10

(54) **Portable optical scanning and pointing systems**
Tragbares optisches Abtast-und Zeigesystem
Système optique de balayage et de pointage

(30) Priority: 01.02.1995 US 381515; 29.06.1995 US 496723
(43) Date of publication of application: 07.04.2004
(62) Divisional of application: 02003052.4
(73) Proprietor: Symbol Technologies, Inc., Holtsville, New York 11742-1300 (US)
(72) Inventor: Bard, Simon, Setauket, NY 11733 (US); Katz, Joseph, Stony Brook, NY 11790 (US); Heiman, F., Los Gatos, CA 95030 (US); Dvorkis, Paul, Stony Brook, NY 11790 (US); Barkan, Edward, Miller Place, NY 11764 (US); Swartz, Jerome, Old Field, NY 11733 (US); Metlitsky, Boris c/o Symbol Technologies, Inc., Holtsville, NY 11742-1300 (US); Stern, Miklos,c/o Symbol Techn, Inc., Holtsville, New York 11742-1300 (US); Krichever, Mark, Hauppauge, NY 11788 (US); DeVita, Joseph c/o Symbol Technologies, Inc., Holtsville, NY 11742-1300 (US); Searle, Don, Setauket, NY 11733 (US); Maiman, Mitchell, Holbrook, NY 11741 (US); McDonald, Jay, Sayville, NY 11782 (US); Potter, John, Medford, NY 11763 (US); Chow, Gonzaga Joseph, Huntington, NY 11743 (US)
(74) Representative: Emde, Eric

(56) References cited:
- US-A- 4 985 878
- US-A- 5 191 197
- US-A- 5 305 181

## Description

This invention relates to portable optical scanners for reading indicia of varying light reflectivity, and in particular to such scanners which are adapted to be worn on the person. The disclosure further relates to optical scanning systems in which the optical module for generating and emitting the light beam is physically separate and apart from the detector module. The disclosure also relates to a laser pointer, adapted to be worn on a finger of a user.

Various optical readers and optical scanning systems have been developed heretofore for reading indicia such as bar code symbols appearing on the label or on the surface of an article. The symbol itself is a coded pattern of indicia comprised of, for example, a series of bars of various widths spaced apart from one another so bound spaces of various widths, the bars and spaces having different light reflecting characteristics. The readers in scanning systems electro-optically transform the graphic indicia into electrical signals, which are decoded into alphanumeric characters that are intended to be descriptive of the article or some characteristic thereof. Such characteristics are typically represented in digital form and utilized as an input to a data processing system for applications in point-of-sale processing, inventory control and the like. Scanning systems of this general type have been disclosed, for example, in US-A-4,251,798; US-A-4,369,361; US-A-4,387,297; US-A-4,409,470; US-A-4,760,248; and US-A-4,896,026. As disclosed in the above patents, one embodiment of such scanning systems includes, inter alia, a hand held, portable laser scanning device supported by a user, which is configured to allow the user to aim the scanning head of the device, and more particularly, a light beam, at a targeted symbol to be read.

Such prior art hand held devices generally incorporate a light-receiving module which receives the light that has been reflected from the bar code symbol and determines, from the reflected pattern, the sequences of bars and spaces within the symbol. The unit may also incorporate decoding circuitry to decode the received information and to recover the underlying data (for example the alphanumeric data) which the bar code symbol represents.

It may in some circumstances be disadvantageous for the light generating and emitting module to be housed within the same unit as the light-receiving module and the decoding circuitry. In the first place, locating everything within the main housing requires that the bar code to be read is positioned so that most or at least a substantial proportion of the reflected light returns to the unit along the same path as the emitted light. It might not always be convenient for a user to position the bar code reading and/or the bar code so that the light is reflected back along the same path in that way. Secondly, locating everything within the same unit means that the unit has to be physically rather large and relatively heavy. Users may not find it easy to operate for long periods.

In the field of laser pointers, it is known to provide small hand held units which users can use at conferences, seminars or the like for pointing purposes. The visible spot of the laser beam, when shone onto a screen, indicates to the audience the point of interest, and enables the lecturer to dispense with the traditional physical pointer. Although modern laser pointers are relatively small and compact, they nevertheless still have to be grasped in the hand of the lecturer, which naturally restricts the lecturer's user of that particular hand. Typically, the laser pointer has to be put down every time the lecturer wishes to do something else, such as to turn over a page in his or her notes, or to operate an overhead projector.

US-A-5,191,197 discloses an arm-mounted scanner actuatable by hand movement, and was used as a basis for the preamble for claim 1. Therein, a hands-free scanning system is disclosed for reading indicia having parts of different light reflectivity, including a housing having a window and an actuatable electro-optical scanner in the housing for projecting a light beam through the window to indicia to be read, for scanning the indicia. The system further detects light of variable intensity that is reflected off the indicia to generate an electrical signal representative of the indicia. The housing is mounted on an arm of an operator and the scanner initiates reading of the indicia upon movement of the operator's hand relative to the arm by means of an actuator switch.

US-A-4,985,878 discloses an electronic timepiece with analog time display unit and electrooptic data display unit. A case member is coupled to a plate member so as to be movable between an opening position and a closing position with respect to the plate member. A switch input section is mounted on the upper surface of the plate member. An analog display unit for displaying time with hands is arranged on the upper surface of the case member. An electrooptic data display unit for displaying data is arranged on the lower surface of the case member. An electronic circuit for driving the analog display unit and the electrooptic data display unit is housed in the case member. The switch input section on the plate member is electrically connected to the electronic circuit of the case member. Data input from the switch input section to the electronic circuit is processed thereby and is displayed on the electrooptic data display unit.; When the case member is set at the closing position, only the analog display unit is exposed. When the case member is set at the opening position, the electrooptic data display unit and the switch input section are exposed, and functions other than a watch function can be executed.

FR-A-2 356 188 discloses that the keyboard for the computer portion of a combined electronic digital watch/computer device is hinged so as to be foldable into either a useable mode or a non-accessable mode.

It is a general object of the present invention at least to alleviate some of these problems of the prior art.

It is a further object to provide a portable optical scanning system with improved ergonomics, and which will be easier for a user to operate for long periods.

It is a further object of the present invention to reduce the weight of a portable optical scanning system adapted to be held in the hand of a user, or mounted to the user's body.

Those of ordinary skill in the art having access to the teachings herein will recognize additional applications, modifications and embodiments in other fields which are within the scope of the invention as disclosed and claimed herein and with respect to which the invention could be of significant utility.

According to the present invention there is provided a wrist-mounted terminal for use in electro-optically reading indicia, as set forth in claim 1. Preferred embodiments of the present invention may be gathered from the dependent claims. In addition, the present application discloses an optical system for reading indicia of different light reflectivity comprising:
an optical module having a light emitter for generating and emitting a light beam for illuminating an indicia to be read; and
a first peripheral module, housed separate and apart from said optical module, having a light detector for detecting the reflection of light from said indicia and producing electrical signals responsive to the light received.

The system may, but need not, be a scanning system in which the light beam scans the indicia to be read. Alternatively, the light beam may be merely illuminating; in that case the light detector may preferably be a CCD detector.

The optical module incorporates or forms part of a ring which is desirably worn on an index finger of the user. To scan the indicia, the user points his or her index finger in the relevant direction. In some arrangements, an automatic scanning mechanism may be incorporated within the module, so that the emitted beam automatically scans back and forth across the indicia (either in a two-dimensional scan or in a one-dimensional scan) even when the module is held stationary. In other arrangements, however, no automatic scanning mechanism is provided, and the emitted light beam emerges in a fixed direction from the module. In those arrangements, the user scans the beam across the indicia to be read by manually moving the module, typically by moving his or her arm back and forth or by a twisting movement of the wrist.

Switching means may be provided for actuating the optical module. Preferably, these may comprise a switch or button, attached to or forming part of the ring or part of a housing secured to the ring, whereby the user can operate the device merely by pressing the button with his or her thumb. This is particularly convenient when the module is arranged to be worn on the index finger. Alternatively, a pull-cord may be provided which is secured to a second ring, arranged to be worn on a finger of the user's hand adjacent to the finger which is wearing the optical module. By a suitable movement of the fingers, for example by flexing the second finger, the cord is pulled thereby operating the device.

It will of course be understood that there are many other possibilities for actuating the device, including switch mechanisms which operate under voice control, and mechanisms which determine when the user's hand is being moved in a scanning motion.

The first peripheral module which has a light detector for detecting the reflection of light from the indicia, may be either fixedly mounted to a stationary support or alternatively worn by the user. In a preferred embodiment, the first peripheral module takes the form of a wrist watch (or includes a wrist watch), and is worn on the same hand which wears the optical module. In that way, it is relatively easy to ensure that the detector or detectors face in the right direction to receive the reflected light. Alternatively, however, the first peripheral module could be worn on the other arm, or could be secured elsewhere on the user's person, for example on a belt.

The first peripheral module may incorporate radio frequency communication means, enabling the module to communicate with either a fixed base unit or, in some embodiments, a second peripheral module. In one preferred arrangement, the second peripheral module may be worn on the user's other arm. The second peripheral module may also incorporate radio frequency communication means, allowing communication between the second module and the first module, and (preferably at a different frequency) between the second module and a fixed base unit.

The optical module, the first peripheral module and the second peripheral module are all preferably operated by means of portable batteries, desirably relatively compact batteries which can be located within the respective housings.

Further, there is provided a system for reading indicia having parts of different light reflectivity, comprising:
a light emitter for generating a light beam which illuminates the indicia and for producing reflected light of variable intensity reflected from said indicia; said light emitter having a housing adapted to be worn on a single finger of a user in a position such that the light beam is directed in a natural pointing direction of said finger; and
an optical detector for detecting said reflected light and producing an electrical signal indicative of the reflected light intensity; said detector having a housing adapted to be worn by the user in a position spaced apart from the light emitter.

The light emitter preferably generates a beam which scans the indicia.

A stand or container may be provided to receive the first and/or second peripheral modules when they are not in use. In the preferred form, this may comprise a box (akin to a jewellery box) having recesses for receiving the first peripheral unit in the form of a watch, and a second peripheral unit in the form of a ring. The stand/container may include electrical contacts, which are arranged to abut corresponding contacts on the first and/or peripheral modules, thereby allowing a battery of either or both of the modules to be recharged when the system is not in use. The box may have a lid, and may be lockable, to provide security.

Where the first peripheral module includes a data store, readout data contacts may be provided on the stand whereby the data may be downloaded to a computer automatically or on demand.

Moreover, there is provided a light pointer module comprising:
a ring adapted to be worn on a single finger of a user;
a housing attached to the ring; and
a light emitting means within the housing arranged to generate and emit a light beam, whereby by pointing the finger the user may direct the light beam.

The laser pointer may desirably incorporate a trigger mechanism such as the button mechanism or cord mechanism described above.

To enhance the visible effect of the light beam, the light emitting means preferably comprise a visible laser diode (VLD), whose output passes through a collimating optical system. Electronic control means may be provided which maintain the laser output at a predetermined level.

A battery is preferably provided within the housing.

It is contemplated for the laser pointer just described to be used in conjunction with the optical scanning system described above.

In addition, there is provided a light pointer module comprising: a light pointer module comprising:
a portable housing;
a light emitter within the housing arranged to generate a light beam, whereby by pointing the module a user may direct the light beam;
a scanning element for selectively scanning the light beam;
a user-actuable switch in a first position of which the module emits a steady beam and in a second position of which the scanning element is actuated so that the module emits a scanning beam.

Further, there is provided an optical system adapted to be worn on the body of a user, the system comprising: an optical system adapted to be worn on the body of a user, the system comprising:
an optical module having a light emitter for generating and emitting a light beam; and
a band secured to the module and adapted to be worn around a part of the user's body, the band incorporating a battery for powering the module.

The invention will now be described, by way of example, with reference to the drawings, in which:
Figures 1a and 1b depict a portable optical scan system ;
Figure 2 illustrates schematically the ring unit and the wrist unit shown in Figures 1a and 1b;
Figure 3 depicts another portable optical scan system;
Figure 4 depicts a laser pointer;
Figure 5 shows details of the laser pointer of Figure 4;
Figures 6A and 6B illustrate the triggering mechanism which may be used with the laser pointer of Figure 4, or with either of the portable optical scan systems of Figures 1 or 3;
Figure 7 illustrates a hand-held laser pointer/laser scanner;
Figure 8 shows schematically yet a further arrangement in which a band for securing a pointer or scanner to the user's body comprises a flexible battery;
Figure 9 represents a practical realization of the device shown in Figure 8;
Figure 10 shows a storage box for use with the portable optical scan system of Figure 1A.
Figure 11 shows a further arrangement in which the optical module comprises a gun shaped device;
Figure 12 shows a further arrangement in which the optical module comprises a pen shaped device;
Figure 13 shows a further arrangement in which the optical module is mounted to the headgear of a user;
Figure 14 shows an embodiment of the present invention in the form of a watch/terminal having a slide-out portion; and
Figures 15a,15b and 15c show a further watch/terminal having a fold-out portion, not in accordance with the present invention.

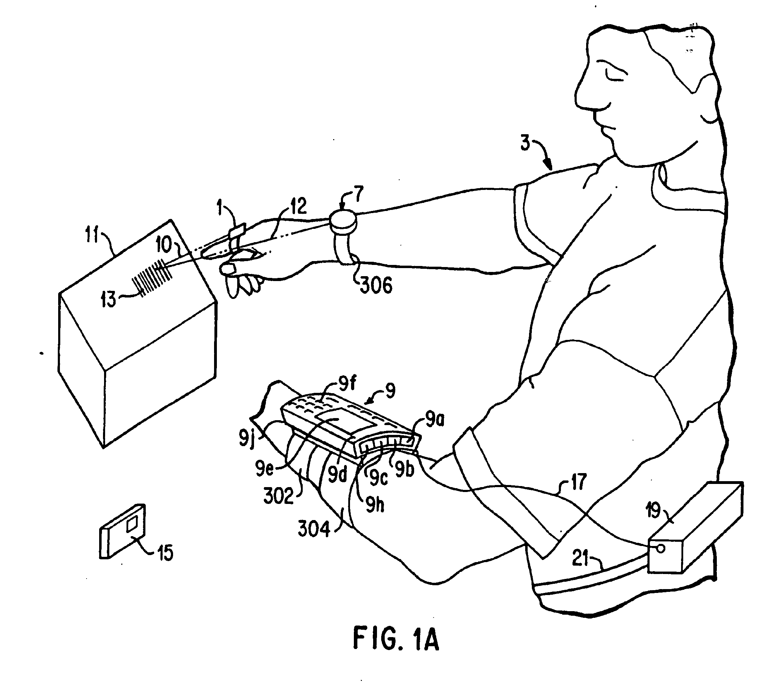

Figure 1a shows a portable optical scan system. An optical scan module 1 is detachably mounted on a single finger of a user 3 using a ring-shaped mounting. The detachable mounting may be of any number of conventional types suitably adapted for its ease of use for the desired application. For example, a ball and flexible socket mounting, or a slide mounting could be used. Other mountings with movable restraining members might also be used.

In additional to the optical scan module 1, the user 3 wears a first peripheral module 7, on the wrist, and a second peripheral module 9 on the other arm. As will be clear from the Figure, the scan module 1 emits a scanning laser beam 10 which the user directs towards a bar code symbol 13 to be read. The bar code symbol may be printed on or otherwise attached to on article 11, details of which the user 3 wishes to obtain for example for inventory or for sale purposes. The scanning beam 10 is reflected from the bar code symbol 13, and the reflected light 12 is detected by the first peripheral module 7.

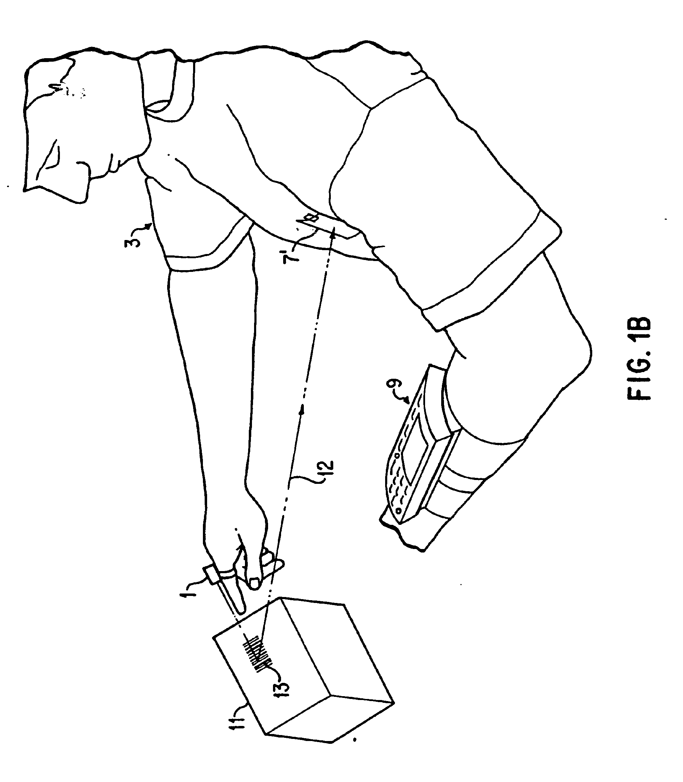

Figure 1b illustrates a variant of the arrangement of Figure 1a in which the reflected light 12 returning from the bar code symbol 13 is detected by a peripheral module 7' which is secured to the user's clothing. In the variant shown, the peripheral module comprises a detector which is clipped on to the breast pocket of the user's shirt or shift. Other arrangements (not shown) could of course be envisaged, in which the peripheral module 7' is secured to or forms part of other articles of clothing.

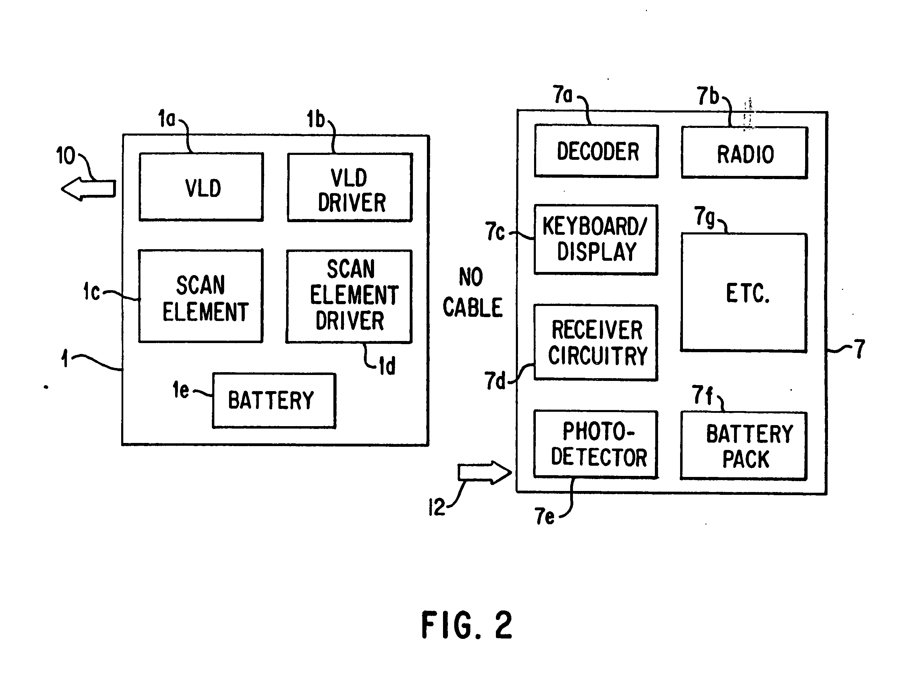

Figure 2 illustrates schematically the internal features of the scan module 1 and the first peripheral module 7. The module 1 incorporates a device for generating and scanning the light beam 10, desirably a visible laser diode (VLD) 1a, having a driver 1b. Scanning of the beam 10 is achieved by means of a scan element 1c, and a scan element driver 1d. Power is provided by means of a small battery 1e.

The first peripheral module 7 comprises a photodetector 7e and receiver circuitry 7d which are together arranged to detect the returning light beam 12. The output from the receiver circuitry is passed to a decoder 7a which is arranged to reconstitute the alphanumeric information which the bar code symbol 13 represents. The first peripheral module may also include a keyboard and/or display 7c along with other possible features 7g such as for example a time display so that the module 7 doubles as an ordinary watch when it is not in use as part of the optical scan system. A radio frequency (RF) or other wireless transmitter 7b, along with a battery pack 7f or other power supply completes the unit.

In use, the decoded information emanating from the decoder 7a is passed by wireless link from the radio 7b to the second peripheral module 9 which is located on the other arm or wrist of the user. The radio transmitter 7b could be a transceiver which is also capable of receiving signals from the second peripheral module 9 or from a separate base station 15.

The second peripheral module 9 incorporates a radio receiver 9a and a radio transmitter 9b for communicating with the first module 7 and/or with the base unit 15. Typically, the respective transmission frequencies will be different. The second peripheral module 9 further includes digitizing and processing circuits 9c which convert the transmitted analog signal to a digital signal and decode the signal in a conventional manner. An indicator light, beeper or audio transducer 9d signals the user when the decoding has been satisfactorily accomplished. Such notice could also or alternatively be provided by information displayed on a display unit 9e. A memory storage device 9h is also preferably included for temporary storage of the decoded data. A keypad 9f and/or touch screen may be used for inputting data to the system. A battery 9j is provided to supply power to the secondary peripheral module. Alternatively, or in addition, power may be supplied via an external lead 17 from a separate power supply 19 which is secured to the body of the user, for example on a belt 21.

Depending upon the preference of the user, the second peripheral module could be worn on the right arm, or wrist, like a watch (and in fact, may function as a watch) and the optical scan module 1 and the first peripheral module on the left. In an alternative embodiment (not shown) the second peripheral module 9 could be dispensed with, with all the features of that unit instead being incorporated within the first peripheral module 7. This would of course be expected to make the first peripheral module rather larger than is shown in the drawing.

It will be noted that in the arrangement shown in Figures 1a and 1b, there is no cable or other physical connection between the optical scan module 1 and either of the first or second peripheral modules. This improves the wearability of the system, and the likely user acceptance. It is also rather safer, since the lack of wires means that there is less to get caught as the user moves around, perhaps undertaking a variety of different tasks while wearing the devices shown.

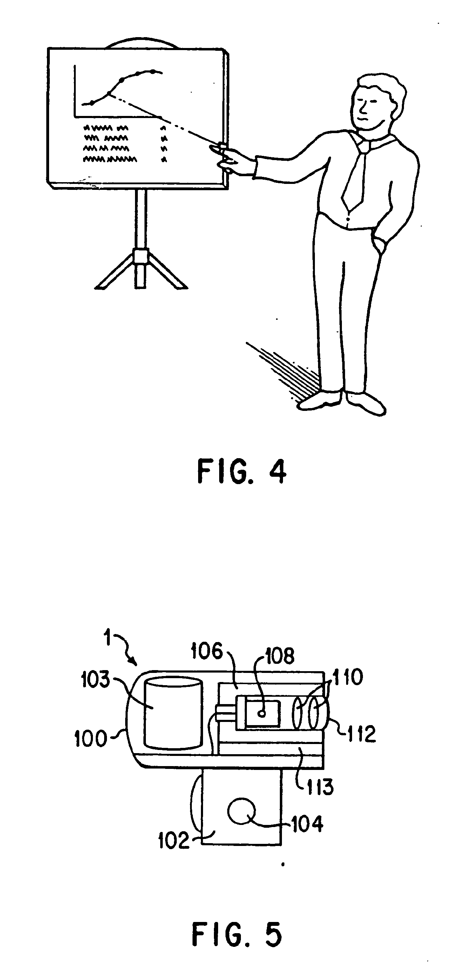

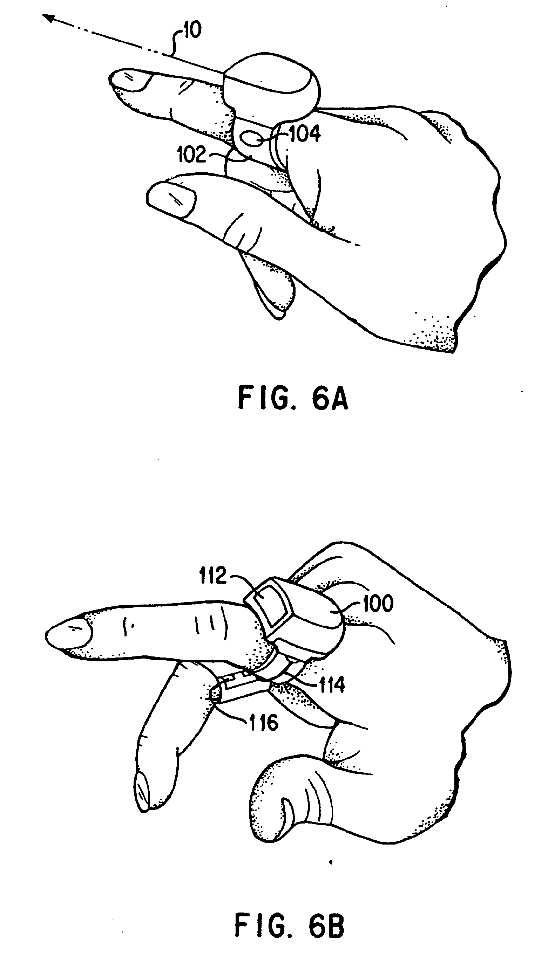

In a variation of the embodiment described above, the scan element 1c and the scan element driver 1d may be omitted from the optical scan module 1, so that the beam 10 is essentially a fixed beam. With such an arrangement, the user would then physically move his or her hand or arm, thereby manually scanning the beam 10 across the bar code symbol 13. Such an arrangement has the advantage that the module 1 can be reduced in size and in weight, not only by elimination of the mechanical and electronic scanning features, but also because the battery 1e may substantially be reduced in size. A suitable module for use with this variation is illustrated in Figures 5 and 6, which will be described in more detail below.

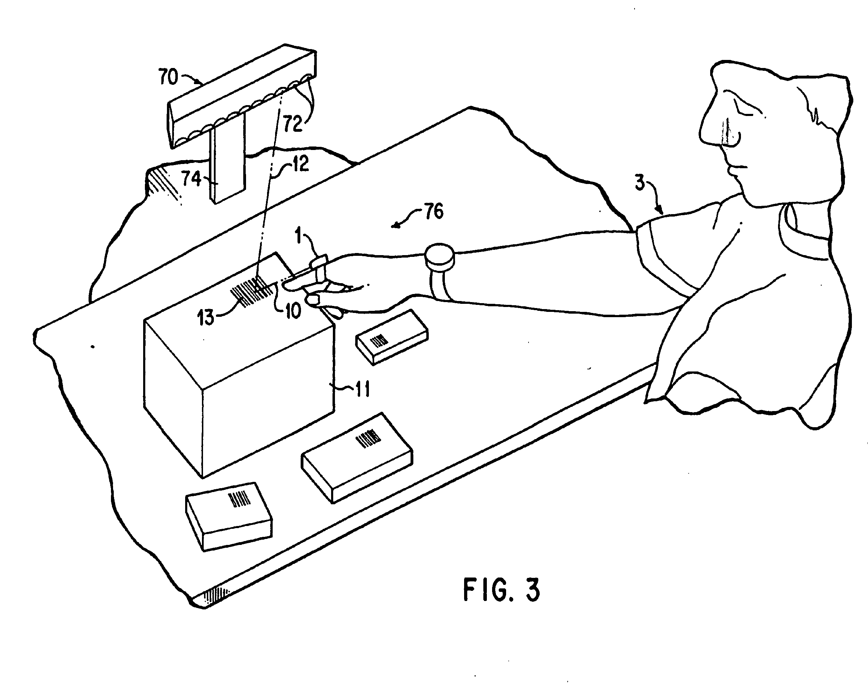

A second arrangement is shown schematically in Figure 3. In this arrangement, the light 12 which is reflected from the bar code symbol 13 is detected by a separate detector unit 70 which comprises a fixed bank of photodetectors 72 which look down o the surface of the article 11 so as to detect the reflected light. The detector unit could be mounted to a stand 74 which is positioned adjacent a conveyor 76 along which the item 11 is passing. Alternatively, the detector unit 70 could be mounted in or secured to a cash register, could be mounted to the ceiling, or may be suspended from the ceiling by a cable similar to a hanging lamp, or could be mounted within a tunnel which surrounds or at least partially surrounds the conveyor.

The optical scan module 1 is preferably the same as the scan module illustrated in Figures 1 and 2, with or without the scan element 1c and the scan element driver 1d. If these are not provided within the module, the user has to manually scan the beam 10 across the bar code symbol 13 to be read. As a further alternative (not shown) a hand held pointer or hand held scanner could instead be used, but in each case the detectors are fixedly mounted over the scanned surface.

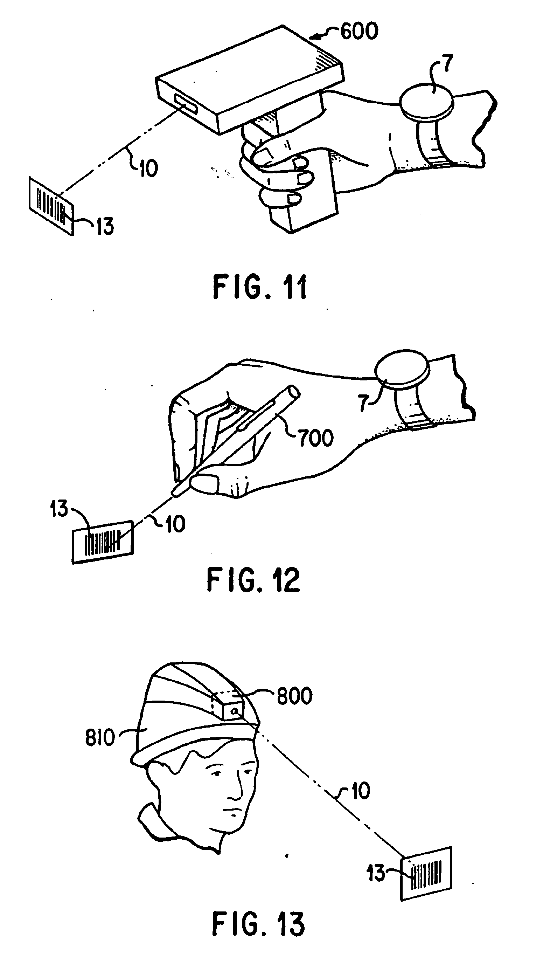

In the arrangements illustrated in Figures 1a, 1b and 3, the module for generating the light beam 10 takes the form of or is incorporated within a ring which is worn on the user's finger. However, in other embodiments the ring 1 could be replaced by other types of optical module, some of which are shown schematically in Figures 11 to 13. In Figure 11, the ring 1 is replaced by a hand-held gun-shaped device 600, which the user merely aims at the bar code 13 to be read. The device 600 may either automatically scan the beam 10 across the bar code 13, or alternatively it may generate a fixed beam which the user scans manually across the bar code by movement of the wrist.

In another arrangement, shown in Figure 12, the optical module takes the form of a pen-shaped device 700. Again, the pen may incorporate a miniature scanner for scanning the beam 10 automatically across the bar code 13, or alternatively a fixed beam may be provided which the user scans manually across the bar code.

Yet a further arrangement is shown in Figure 13. Here, an optical module 800 is provided in head-gear 810 worn by the user. The module 800 may either automatically scan the beam 10 across the bar code 13, or alternatively a fixed beam may be provided which the user scans manually by movement of the head.

In the arrangements of Figures 11,12 and 13, light reflected back from the bar code may be picked up by a watch/terminal 7. This could be worn on either wrist. Alternatively, a detector 7' (Figure 1b) attached to the user's clothing could be used. As a further alternatively, a fixed detector assembly 70 (Figure 3) could be used.

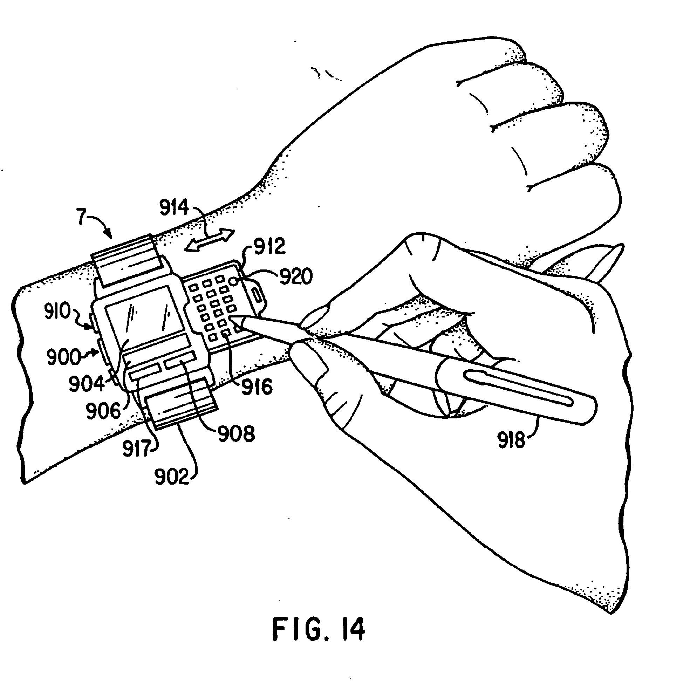

Turning now to Figure 14, there is shown a first preferred embodiment of the present invention in the form of a first peripheral module, namely the wrist unit 7 shown schematically in Figures 1a, 11 and 12.

The module 7 comprises a body portion 900 which is secured to the user's wrist by a strap 902, in the manner of a wrist watch. The body portion has a display 904, a miniature microphone 906, a photodetector 908, a transmitter unit 917 and a plurality of function keys 910. Beneath or within the body portion 900 there is stored a key pad 912 which can be slid in and out in the direction of the arrow 914 for access to the keys 916. The keys may be actuated by means of a pen or stylus 918.

In use, the unit receives at the photodetector 908 light which has been reflected from the bar code, and it automatically transmits a signal representative of the information received to a second peripheral unit, for example the arm unit shown in Figure 1a. If the user wishes to send an audio message to the second peripheral unit, that may easily be achieved simply by speaking into the microphone 906. The wrist unit then transmits the spoken words via radio communication from the transmitter 917 to the appropriate remote station.

Instead of or in addition to the photodetector 908 on the body 900, there may be a photodetector 920 on the keypad. In one preferred arrangement, the keys 916 on the keypad may relate to the bar code reading functions, with the keypad simply being slid back out of the way when those functions are no longer needed. The unit may then operate as a normal wrist watch, with the time being indicated on the display 904, and the watch being controllable by the function keys 910.

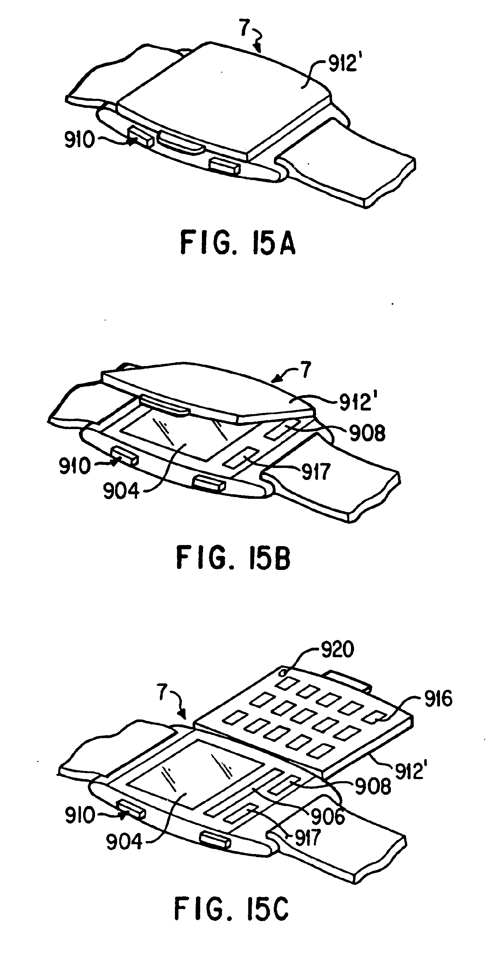

An alternative arrangement is shown in Figures 15a to 15c. This corresponds generally to the embodiment of Figure 14, and like features are marked with like reference numerals. The only difference is that the slidable keypad 910 in Figure 14 is replaced in Figure 15 with a hinged keypad unit 912'. In the closed position, shown in Figure 15a, the keypad acts as a cover for the unit. Hinging the cover back, reveals the keys 916, and in the preferred arrangement the photodetector 920.

Where the microphone 906 is not required, it may be omitted.

In those cases in which the optical scan module 1 does not incorporate a beam scanning mechanism, the module 1 effectively becomes a ring-mounted laser pointer. Such a pointer may, as previously described, be used for scanning applications merely by scanning the beam manually across the indicia to be detected, and providing separate detectors elsewhere, either fixedly mounted or secured to the body of the user, which detect the reflected beam. However, a laser pointer of this type is not necessarily restricted to scanning applications, and as may be seen from Figure 4 the laser pointer could instead be used at lectures, seminars, meetings and so on, or indeed at any type of public presentation.

Reference should now be made to Figures 5 and 6 which illustrate certain preferred features of the laser pointer. The arrangement shown in Figures 5 and 6 is equally applicable both to the application of Figure 4 and the application of Figures 1a, 1b and 2.

The laser pointer 1 comprises a ring or shank portion 102, adapted to be worn on the finger of the user, to which is secured an upper housing portion 100. Within the housing is a battery 103 which provides power to a visible laser diode (VLD) or other light source 108. The VLD is mounted to a metal holder/heat sink 106. Light generated from the VLD passes through an optical system 110 comprising a plurality of lenses, out through an exit window 112. The optical system preferably provides that the beam 10 is collimated or at least quasi-collimated. Electronic circuitry 113 is provided which maintains the laser output at a predetermined level, and also acts as a trigger mechanism.

A trigger button 104 is provided on one side of the ring 102, where is can be actuated by the user's thumb. In this way, the user can easily switch the laser beam on and off.

Another alternative and/or additional switching mechanism may be provided by means of a separate ring 116 which is attached to the user's middle finger and which is secured to the ring 102 by means of a cord 114. As is shown in Figure 6B, the user may operate the device by flexing the middle finger, and so pulling on the cord. This could be done either by bending the middle finger with respect to the index finger, or by pulling the middle finger away from the index finger.

A device of this sort is both easy and convenient for a lecturer to wear, and it also allows free use of the hand at all times. Because the ring is preferably mounted to the index or forefinger, pointing accuracy is likely to be increased.

An alternative and/or additional switching mechanism may be provided by the use of a limited range proximity sensor located on the front or side surface of the ring 102. When the user wishes to turn the unit on, a slight movement of the thumb closer to the index finger will switch the unit on, thus avoiding the effort required for the thumb to press a trigger switch.

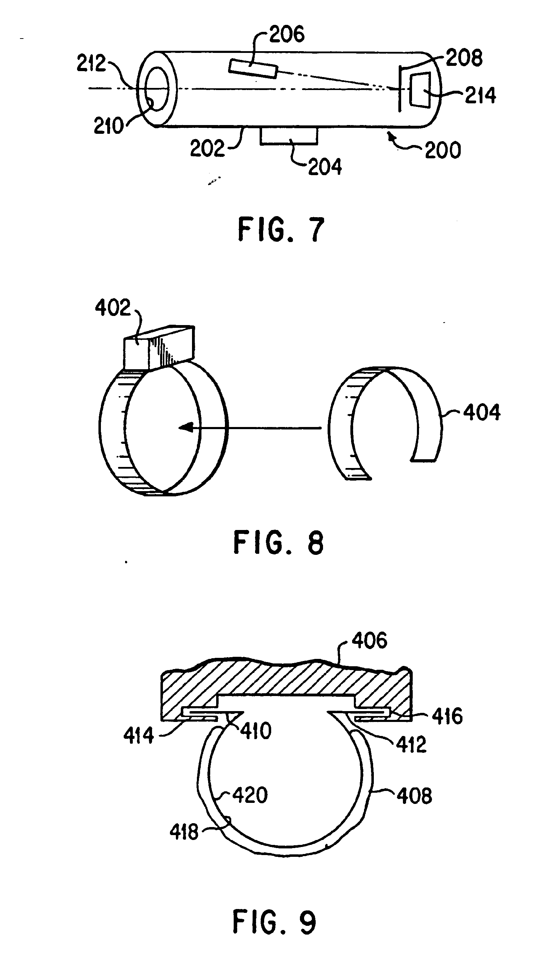

Figures 7 illustrates, schematically, a hand-held laser pointer 200 which is capable either of providing a fixed laser beam, for pointing purposes, or a scanning laser beam. Whereas a fixed laser beam generates a point or dot, that can be aimed at a screen, a scanning beam generates a line or a circle. This especially convenient if the user wishes to underline or to circle a sentence or a figure that is being pointed to.

The pointer shown in Figure 7 incorporates a hand-held body 202, having a manually actuable multi-positioned switch 204. Inside the body 202 there is a short wavelength VLD (visible laser diode) 206 which directs a beam onto a small, micro-machined mirror 208. This deflects the beam out of a window 210 in the housing, thereby providing a pointing beam 212. A scanning element 214 is provided for selectively oscillating the mirror 208, thereby causing the beam 212 to be scanned.

In a first position of the switch 204, the laser diode 206 is switched off, and no beam is produced. In a second position, the laser diode is switched on and is reflected from the stationary mirror 208, thereby providing a fixed pointing beam 212. In a third position of the switch, the scanning element 214 is actuated, causing the beam 212 to be scanned, thereby generating a visible line on the surface that is being pointed to. In the preferred embodiment, the scanning is in one dimension so that the resultant line on the screen is straight. In an alternative embodiment, however, the scanning element 214 could cause the beam 212 to be scanned in two directions, thereby forming any desired type of lissajous, such as a circle, on the screen. More complex scanning arrangements could also be envisaged, so that for example the image projected onto the screen is a square or other desired figure.

If the trigger 204 is a multi-position trigger, the device could provide a projected straight line in one position of the trigger, and a projected circle in another position. Different positions of the trigger could also provide different lengths of line and/or different sizes of circle or other images that are being projected.

Scanning of the beam 212 of course reduces the visibility of the image with respect to the visibility of the dot generated by a fixed beam. To compensate, the laser output power is increased according to the position of the trigger 204.

Instead of being hand-held, the device shown in Figure 7 may be built into a ring, and in particular it may be built into any one of the rings that have previously been described. Naturally, in such a case, the trigger 204 will be replaced with an appropriate trigger or switch on the ring itself. For example, if the arrangement of Figure 7 is built into the ring shown in Figure 6, the trigger 204 is merely replaced by the trigger button 104 (Figure 6A) or the cord 114 (Figure 6B). It will of course be appreciated that, where appropriate, the button and/or cord may be multi-position. Alternatively (not shown) there may be several separate switches, one of which for example produces a fixed beam and another of which produces a scanning beam.

Batteries for wearable devices of the types which have already been described typically occupy a significant proportion of the device's volume, and additionally contribute to its weight. Where substantial power is required, such as for example the devices illustrated in Figures 1 to 3, a separate battery pack 19 is often the most convenient way to provide the power that is needed. However, in a variation of the embodiments previously described, power may instead or in addition be provided by a thin flexible battery which forms part of the band that wraps around the arm, wrist or finger of the user. Specifically, in Figure 1A the wrist band 306 could be such a battery, as could be the arm bands 302,304. In Figure 5, the ring 102 could be a battery.

Preferably, the battery is of the lithium polymer rechargeable type, which is simply cut into the appropriate shape. Such batteries may provide sufficient power, on their own, for operation of some devices; in other cases, they may be used as an auxiliary battery, thereby reducing the size of the additional cells that may be necessary.

Figure 8 illustrates the concept in schematic form. A flexible battery strip 404, preferably a lithium polymer battery, is formed into a ring shape and is attached to a scanner and/laser pointer 402. Depending upon the size of the device, the band 404 may fit around a finger, a wrist or an arm of the user.

Figure 9 illustrates a practical embodiment in more detail. A flexible battery strip 408 is attached to two circularly-shaped snap springs 418,420. One snap spring 418 is attached to the positive battery terminal, and the other 420 to the negative battery terminal. At one end of the spring 418 there is a contact portion 410, while at the opposite end of the other spring 420 there is a similar contact portion 412. These fit into corresponding grooves 414,416 in the lower surface of the scanner/laser pointer 406, thereby providing the necessary electrical power.

The exact shape and configuration of the battery and the contacts is not of course critical. In the arrangement shown in Figure 9, the springs 418,420 could be in the form of thin, sprung wires. Alternatively, they could take the form of flat leaf springs, which extend out of the plane of the diagram. In the first case, the scanner/laser pointer 406 is provided with sockets 414,416 in the form of blind bores which receive the contact portions 410,412. Alternatively, where the springs take the form of leaf springs, the contact portions 410,412 may simply be slid into appropriate grooves 414,416 in a direction perpendicular to the plane of the figure. In either case, the snap springs 418,412 are preferably incorporated within the plastic protective jacket of the battery during the manufacturing process.

To make it easier to put the device on and to take it off, an alternative embodiment (not shown) provides for one end of the battery to be hinged to the underside of the scanner/laser pointer. The other end is secured by an easily-releasible clasp. To put the device on, or to take it off, the user merely releases the clasp and hinges the battery away from the underside of the scanner/laser pointer.

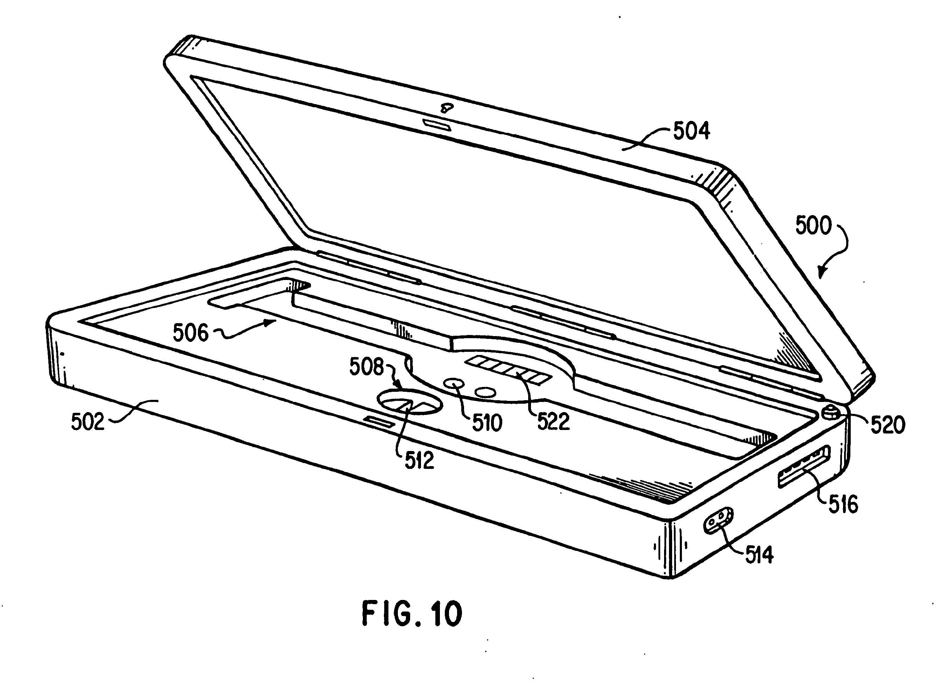

Figure 10 shows a storage box 500 which is suitable for use with the system shown in Figure 1A. The box comprises a base portion 502 and a lockable hinged lid portion 504. Within the base portion 502 there is a first recess 506 for storing the watch 7 (Figure 1A) and a second recess 508 for storing the ring 1 (also Figure 1A). In addition to providing convenient and secure storage, the box 500 incorporates a battery charger (not shown) to recharge any battery that may be incorporated within the watch 7 and/or the ring 1. To that end, when the watch is placed within the recess 506, its rear surface comes into contact with electrodes 510. Likewise, when the ring is placed in the recess 508, with the band portion pushed down into a slot 512, it comes into contact with further electrodes (not shown). Power is provided to these electrodes via a mains supply which is plugged into a socket 514 on the outside of the box. The electrodes become live, thereby recharging the batteries (for example overnight) when the lid 504 is closed, thereby closing a microswitch 520.

The watch 7 of Figure 1A may be used to store data, and may accordingly have a memory chip inside it. When the watch is placed in the recess 506, an electrical contact on its rear surface abuts a corresponding contact 522 at the base of the recess. The data within the watch may then automatically be downloaded, or downloaded on request, via a data socket 516 to an external computer (not shown).

## Claims

1. A wrist-mounted terminal (7) for use in electro-optically reading indicia, the terminal (7) including a main body (900), a display (904) supported by the main body (900 for displaying information, a strap (902) secured to the main body (900) for securing the main body (900) on and around a wrist of an operator, and a detector (908, 920) for detecting light of variable intensity reflected off an indicium to be read and for generating an electrical signal indicative of the detected light intensity, a keypad (912) having a plurality of manually depressible keys (916) for entering data relating to the indicia, the terminal (7) being **characterized by**: the keypad being a
movable keypad (912) mounted on the main body (900) for movement relative to the main body (900) between a concealed position in which the keys (916) are concealed by the main body (900), and an exposed position in which the keys (916) are exposed and accessible to be depressed by the operator, wherein the main body (900) has an interior cavity, wherein the movable keypad (912) is received in the interior cavity in the concealed position, and wherein the movable keypad (912) is mounted for sliding movement in and out of the interior cavity.

2. The wrist-mounted terminal (7) according to claim 1, wherein the movable keypad (912) has a handle for enabling the movable keypad (912) to be moved between said positions.

3. The wrist-mounted terminal (7) according to claim 1, wherein the display (904) overlies the movable keypad (912) in the concealed position.

4. The wrist-mounted terminal (7) according to claim 1, wherein the main body (900) has a front face on which the display (904) is situated, and wherein the detector (908) is situated on the front face.

5. The wrist-mounted terminal (7) according to claim 1; further comprising a radio transmitter (917) supported by the main body (900), for transmitting the electrical signal to a remote station away from the main body (900).

6. The wrist-mounted terminal (7) according to claim 5, further comprising a microphone (906) supported by the main body (900), for converting sounds picked up by the microphone (906) into audio signals, and wherein the radio transmitter (917) is also operative for transmitting the audio signals to the remote station.

7. The wrist-mounted terminal (7) according to claim 1; further comprising function keys (910) on the main body (900), and wherein the display (904) visually displays time information controlled by the function keys (910).

8. The wrist-mounted terminal (7) according to claim 1; further comprising a battery for supplying electrical power to the detector (908, 920).

## Patentansprüche

1. Ein am Handgelenk angebrachtes Endgerät (7), zur Verwendung beim elektrooptischen Lesen von (Kenn-)Zeichen, wobei das Endgerät (7) Folgendes umfasst: einen Hauptkörper (900), eine Anzeige (904), die durch den Hauptkörper (900) getragen wird, zur Anzeige von Informationen, ein Band bzw. einen Gurt (902), der an dem Hauptkörper (900) zum Befestigen des Hauptkörper (900) an und um ein Handgelenk eines Bedieners befestigt ist, und einen Detektor (908, 920) zum Detektieren von Licht variabler Intensität, das von einem (Kenn-)Zeichen reflektiert wird, das gelesen werden soll, und zum Erzeugen eines elektrischen Signals, das eine Anzeige für die detektierte Lichtintensität bildet, eine Tastatur (912) mit einer Vielzahl von manuell drückbaren Tasten (916) zum Eingeben von Daten, die in Bezug zu den (Kenn-)Zeichen stehen,
wobei das Endgerät (7) **dadurch gekennzeichnet ist:**
**dass** die Tastatur eine bewegbare Tastatur (912) ist, die auf dem Hauptkörper (900) angebracht ist, und zwar zur Bewegung relativ zu dem Hauptkörper (900) zwischen einer verdeckten Position, in der die Tasten (916) durch den Hauptkörper (900) verdeckt sind, und einer exponierten Position, in der die Tasten (916) exponiert und zugänglich sind, so dass sie durch den Bediener gedrückt werden können, wobei der Hauptkörper (900) einen inneren Hohlraum besitzt, wobei die bewegbare Tastatur (912) in dem inneren Hohlraum in der verdeckten Position aufgenommen wird, und wobei die bewegbare Tastatur (912) für eine Gleitbewegung in und aus dem inneren Hohlraum angebracht ist.

2. Am Handgelenk angebrachtes Endgerät (7) gemäß Anspruch 1, wobei die bewegbare Tastatur (912) einen Griff besitzt, der es möglich macht, dass die bewegbare Tastatur (912) zwischen den Positionen bewegt wird.

3. Am Handgelenk angebrachtes Endgerät (7) gemäß Anspruch 1, wobei die Anzeige (904) über der bewegbaren Tastatur (912) in der verdeckten Position liegt.

4. Am Handgelenk angebrachtes Endgerät (7) gemäß Anspruch 1, wobei der Hauptkörper (900) eine Vorderfläche besitzt, auf der sich die Anzeige (904) befindet, und wobei sich der Detektor (908) auf der Vorderfläche befindet.

5. Am Handgelenk angebrachtes Endgerät (7) gemäß Anspruch 1, das ferner einen Funküberträger (917) aufweist, der von dem Hauptkörper (900) getragen wird, und zwar zum Übertragen des elektrischen Signals an ein entfernte Station bzw. Gegenstelle weg von dem Hauptkörper (900)

6. Am Handgelenk angebrachtes Endgerät (7) gemäß Anspruch 5, das ferner ein Mikrofon (906) aufweist, das durch den Hauptkörper (900) getragen wird, und zwar zum Umwandeln von Geräuschen, die durch das Mikrofon (906) aufgefangen werden, in Audiosignale, und wobei der Funksender (917) betriebsbereit ist, um die Audiosignale an die Gegenstelle zu senden.

7. Am Handgelenk angebrachtes Endgerät (7) gemäß Anspruch 1, das ferner Funktionstasten (910) auf dem Hauptkörper (900) aufweist, und wobei die Anzeige (904) visuell die Zeitinformation darstellt, die durch die Funktionstasten (910) gesteuert wird.

8. Am Handgelenk angebrachtes Endgerät (7) gemäß Anspruch 1, das ferner eine Batterie zum Liefern der elektrischen Leistung an den Detektor (908, 920) aufweist.

## Revendications

1. Terminal porté au poignet (7) pour utilisation dans une lecture électro-optique de marquages, le terminal (7) comprenant un corps principal (900), un afficheur (904) porté par le corps principal (900) pour afficher des informations, une sangle (902) fixée au corps principal (900) pour fixer le corps principal (900) sur et autour du poignet d'un opérateur, et un détecteur (908, 920) pour détecter de la lumière d'intensité variable réfléchie par un marquage à lire et pour produire un signal électrique indicatif de l'intensité lumineuse détectée,
un clavier (912) comportant une pluralité de touches à appui manuel (916) pour introduire des données concernant les marquages,
le terminal (7) étant **caractérisé en ce que** le clavier est un clavier mobile (912) monté sur le corps principal (900) de façon à pouvoir se déplacer par rapport au corps principal (900) entre une position dissimulée, dans laquelle les touches (916) sont dissimulées par le corps principal (900), et une position exposée dans laquelle les touches (916) sont exposées et accessibles pour un appui par l'opérateur, le corps principal (900) comportant une cavité intérieure, le clavier mobile (912) étant reçu dans la cavité intérieure dans la position dissimulée, et le clavier mobile (912) étant monté de façon à pouvoir coulisser pour entrer et sortir de la cavité intérieure.

2. Terminal porté au poignet (7) selon la revendication 1, dans lequel le clavier mobile (912) comporte une poignée pour permettre de déplacer le clavier mobile (912) entre lesdites positions.

3. Terminal porté au poignet (7) selon la revendication 1, dans lequel l'afficheur (904) recouvre le clavier mobile (912) dans la position dissimulée.

4. Terminal porté au poignet (7) selon la revendication 1, dans lequel le corps principal (900) comporte une face avant sur laquelle se trouve l'afficheur (904), et dans lequel le détecteur (908) est situé sur la face avant.

5. Terminal porté au poignet (7) selon la revendication 1, comprenant en outre un émetteur radio (917) porté par le corps principal (900), pour transmettre le signal électrique vers un poste distant éloigné du corps principal (900).

6. Terminal porté au poignet (7) selon la revendication 5, comprenant en outre un microphone (906) porté par le corps principal (900), pour convertir des sons prélevés par le microphone (906) en signaux audio, et dans lequel l'émetteur radio (917) est aussi apte à transmettre les signaux audio vers le poste distant.

7. Terminal porté au poignet (7) selon la revendication 1, comprenant en outre des touches fonction (910) sur le corps principal (900), et dans lequel l'afficheur (904) affiche visuellement des informations temporelles sous le contrôle des touches fonction (910).

8. Terminal porté au poignet (7) selon la revendication 1, comprenant en outre une batterie destinée à fournir de l'énergie électrique au détecteur (908, 920).
